(19)

Europäisches
Patentamt
European
Patent Office
Office européen
des brevets

(11) **EP 3 534 326 A1**

(12) **EUROPEAN PATENT APPLICATION**
published in accordance with Art. 153(4) EPC

(43) Date of publication:
**04.09.2019 Bulletin 2019/36**

(21) Application number: **17865257.4**

(22) Date of filing: **22.06.2017**

(51) Int Cl.:
**G06T 5/50** *(2006.01)*     **G06T 7/30** *(2017.01)*
**G06T 7/90** *(2017.01)*

(86) International application number:
**PCT/CN2017/089508**

(87) International publication number:
**WO 2018/076732 (03.05.2018 Gazette 2018/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.10.2016  CN 201610930903**

(71) Applicant: **Guangzhou SAT Infrared Technology
Co., Ltd.
Guangzhou, Guangdong 510730 (CN)**

(72) Inventors:
 • **WU, Tao
   Guangzhou
   Guangdong 510730 (CN)**
 • **ZHANG, Wei
   Guangzhou
   Guangdong 510730 (CN)**
 • **ZHAO, Qingzhuang
   Guangzhou
   Guangdong 510730 (CN)**
 • **XIAO, Xizhong
   Guangzhou
   Guangdong 510730 (CN)**

(74) Representative: **Ragot, Sébastien Pierre
   E. Blum & Co. Ltd.
   Patent and Trademark Attorneys VSP
   Vorderberg 11
   8044 Zürich (CH)**

(54) **METHOD AND APPARATUS FOR MERGING INFRARED IMAGE AND VISIBLE LIGHT IMAGE**

(57)     A method and apparatus for merging an infrared image and a visible light image, the method comprising: performing colour space conversion of the visible light image to acquire the luminance component thereof; extracting edge information of the luminance component of the visible light image, and merging the edge information and the luminance component of the infrared image to acquire a merged luminance component; pseudo-colouring the infrared image to acquire a pseudo-coloured infrared image; performing colour space conversion of the pseudo-coloured infrared image to acquire the colour tone component and saturation component thereof; and performing inverse colour space conversion of the merged luminescence component, the colour tone component, and the saturation component to acquire a pseudo-coloured merged image. A merged image acquired on the basis of said method can retain both the detail information of the visible light image and the temperature information of the infrared image.

FIG. 1

EP 3 534 326 A1

**Description**

TECHNICAL FIELD

The present disclosure relates to the field of image processing technology, in particular, to a method and an apparatus for merging an infrared image and a visible light image.

BACKGROUND

An infrared camera is different from a general visible light camera. It uses the infrared camera to acquire infrared radiation of target, and records infrared radiation information of the target itself. Although the infrared camera has better detection performance for thermal target, it is not sensitive to brightness changes of the background, and has low imaging resolution, which is not conducive to human eye interpretation. However, the visible light camera is only sensitive to reflection of target scene, and has nothing to do with thermal contrast of the target scene. And the visible light camera has high resolution and can provide detailed information of a scene in which the target is located.

In general, due to differences in characteristics of the infrared radiation between the target and the background, the infrared image may provide complete target information, but the background information it contains is ambiguous. In contrast, the visible light image may provide more comprehensive background information, but the target information is not obvious. For example, in the scene where the infrared camera is used to detect whether a device is running normally, an infrared temperature display is used to judge whether the device is running normally. At this time, the image provided by the infrared camera is an infrared temperature display figure when the device is running, and user can judge whether there is overheating in the device from the figure. However, due to the uniform temperature distribution of the background environment where the device is located, the contrast of the background information provided by the infrared camera is not obvious, and the image resolution is low, so that the user cannot accurately identify the specific part of the overheating. That is, it is impossible to distinguish which component of device is broke down, which may delay the maintenance time. And there may also exist that the user cannot judge which kind of device is in the infrared image only according to the infrared image, and which further delays normal maintenance work of maintenance personnel.

In the process of implementing the present disclosure, it is found that at least the following problems existed in the prior art. The background information of the infrared image provided by existing infrared camera is relatively ambiguous and the resolution is low, so that it is cannot help the user to accurately judge the specific part where the device is broke down.

Therefore, a new method and an apparatus for merging an infrared image and a visible light image are needed.

The above information disclosed in this Background section is only for enhancement of understanding of the background of the present disclosure, and thus it may include information that does not constitute the prior art known to those of ordinary skill in the art.

SUMMARY

The present applicant discloses a method and an apparatus for merging an infrared image and a visible light image, which improves recognition ability of the thermal target, thereby enhancing location efficiency of maintenance personnel for fault target.

Other features and advantages of the present disclosure will become apparent through the following detailed description, or will be learned in part through the practice of the present disclosure.

According to an aspect of the present disclosure, a method for merging an infrared image and a visible light image is provided, including:

performing color space conversion of the visible light image to acquire a luminance component of the visible light image;

extracting edge information from the luminance component of the visible light image, and merging the edge information with a luminance component of the infrared image to acquire a merged luminance component;

performing pseudo-coloring of the infrared image to acquire a pseudo-color infrared image;

performing color space conversion of the pseudo-color infrared image to acquire a color tone component and a saturation component; and

performing color space inversion of the merged luminance component, the color tone component and the saturation component to acquire a pseudo-color merged image.

In an exemplary embodiment of the present disclosure, the method further includes: collecting the visible light image and the infrared image at a same viewing angle respectively.

In an exemplary embodiment of the present disclosure, the method further includes: performing image registration of the infrared image and the visible light image.

In an exemplary embodiment of the present disclosure, the performing image registration of the infrared image and the visible light image includes:

selecting one of the infrared image and the visible light image as a reference image, and another one among them as an image to be registered;

acquiring a registration parameter of the image to be registered;

implementing image registration of the infrared image and the visible light image according to the registration parameter of the image to be registered.

In an exemplary embodiment of the present disclosure, the reference image is the infrared image, and the image to be registered is the visible light image.

In an exemplary embodiment of the present disclosure, the acquiring a registration parameter of the image to be registered, includes:

selecting a testing target and a preset number of feature points on the testing target;

acquiring another preset number of testing infrared images and testing visible light images with the testing target being at different target distances, respectively, and coordinates of the feature points on the testing infrared images and the testing visible light images;

acquiring the another preset number of affine transformation parameters according to an affine transformation formula and the coordinates of the feature points;

acquiring relational expression between the affine transformation parameters and the target distances by fitting according to the another preset number of the affine transformation parameters; and

acquiring the registration parameter of the image to be registered according to the relational expression and a distance between the image to be registered and a tested target.

In an exemplary embodiment of the present disclosure, the extracting edge information of the visible light image includes:

performing filtering of the luminance component of the visible light image to extract the edge information of the visible light.

In an exemplary embodiment of the present disclosure, the performing filtering of the luminance component of the visible light image comprises performing the filtering with a filter matrix as follows:

$$\begin{bmatrix} -2 & -4 & -4 & -4 & -2 \\ -4 & 0 & 8 & 0 & -4 \\ -4 & 8 & 24 & 8 & -4 \\ -4 & 0 & 8 & 0 & -4 \\ -2 & -4 & -4 & -4 & -2 \end{bmatrix}.$$

In an exemplary embodiment of the present disclosure, the merging the edge information with a luminance component of the infrared image includes: performing equal proportional weighted merging of the edge information and the luminance component of the infrared image.

According to an aspect of the present disclosure, an apparatus for merging an infrared image and a visible light image is provided, including:

a first color space conversion module configured for performing conversion, from RGB color space to YUV color space, of the visible light image to acquire a luminance component of the visible light image;

a merged luminance component acquiring module configured for extracting edge information from the luminance component of the visible light image, and merging the edge information with a luminance component of the infrared image to acquire a merged luminance component;

a pseudo-color infrared image obtaining module configured for performing pseudo-coloring of the infrared image to acquire a pseudo-color infrared image;

a second color space conversion module configured for performing conversion, from the RGB color space to the YUV color space, of the pseudo-color infrared image to acquire a color tone component and a saturation component; and

a color space inversion module configured for performing conversion, from the YUV color space to the RGB color space, of the merged luminance component, the color tone component and the saturation component to acquire a pseudo-color merged image.

In an exemplary embodiment of the present disclosure, the apparatus further includes: an image collection module configured for collecting the visible light image and the infrared image at a same viewing angle respectively.

In an exemplary embodiment of the present disclosure, the apparatus further includes: an image registration module configured for performing image registration of the infrared image and the visible light image.

In an exemplary embodiment of the present disclosure, the apparatus further includes: a mode selection module for selecting any one of a plurality of preset output modes.

At least one of the technical solutions as described above has the following beneficial effects. According to the method and apparatus for merging the infrared image and the visible light image, the edge information of merged images which are provided with the visible light image and the temperature information of the infrared image may enhance physical details of the merged images, and maintain color perception of original pseudo-color infrared image simultaneously, which conforms to the user's observation habit of thermal infrared image.

BRIEF DESCRIPTION OF THE DRAWINGS

The above and other features and advantages of the present disclosure will become more by detailed describing the exemplary embodiments with reference to the accompanying drawings.

FIG. 1 is a flow chart illustrating a method for merging an infrared image and a visible light image according to an exemplary embodiment of the present disclosure;

FIG. 2 is a schematic diagram illustrating a method for merging the infrared image and the visible light image according to an exemplary embodiment of the present disclosure;

FIG. 3 is a flow chart illustrating a method for implementing image registration according to an exemplary embodiment of the present disclosure;

FIG. 4 is a block diagram illustrating an apparatus for merging the infrared image and the visible light image according to an exemplary embodiment of the present disclosure;

FIG. 5 is a block diagram illustrating an apparatus for merging the infrared image and the visible light image according to another exemplary embodiment of the present disclosure.

DETAILED DESCRIPTION

Exemplary embodiments will now be described more fully with reference to the accompanying drawings. However, the exemplary embodiments can be implemented in various forms and should not be constructed as being limited to the embodiments described herein. On the contrary, providing these embodiments enables the present disclosure to be comprehensive and complete, and the concept of the exemplary embodiments to be fully communicated to those skilled in the art. The same reference numbers in the drawings denote the same or similar parts, and the repeated description thereof will be omitted.

In addition, the described features, structures, or characteristics may be combined in any suitable manner into one or more embodiments. In the following description, numerous specific details are set forth to fully understand the embodiments of the present disclosure. However, one skilled in the art will should appreciate that one or more of the specific details may be omitted or other methods, components, devices, steps and the like may be employed when implementing technical solutions of the embodiments of the present disclosure. In other cases, well-known structures, methods, apparatus, implementation, material, or operation will not be shown or described in detail to avoid obscuring various aspects of the present disclosure.

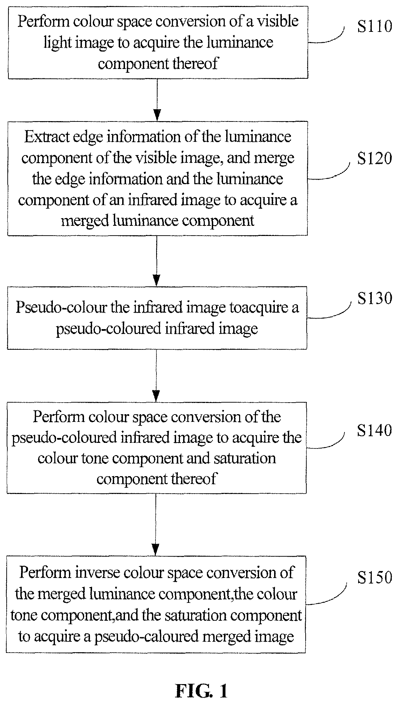

FIG. 1 is a flow chart illustrating a method for merging an infrared image and a visible light image according to an exemplary embodiment of the present disclosure.

As shown inFIG.1, in step S110, color space conversion of the visible light image is performed to acquire a luminance component thereof.

In an embodiment, color space conversion from RGB color space to YUV color space of the visible light image may be performed.

YUV (also known as YCrCb) is a color coding method (belonging to PAL) adopted by European television systems. YUV is mainly used for optimizing transmission of color video signals, thereby making it backward compatible with old-fashioned black-and-white TVs. Compared to the transmission of RGB video signals, its biggest advantage is that it requires very little bandwidth (RGB requires three independent video signals to be transmitted simultaneously). Herein, "Y" indicates brightness (luminance or luma), which is a gray order value; "U" and "V" indicate chroma (chrominance or chroma), which are used for describing image color and saturation and specifying the color of pixels. The "brightness" is created by RGB input signals, and the method is to superimpose specific parts of RGB signals together. The "chroma" defines two aspects of the color, that is tone and saturation, which are expressed by Cr and Cb, respectively. Herein, the Cr reflects difference between red part of the RGB input signals and a brightness value of the RGB signals. However, the Cb reflects difference between blue part of the RGB input signals and the brightness value of the RGB signals.

In an exemplary embodiment, the method further includes that the visible light image and the infrared image are collected respectively at the same viewing angle.

In order to realize mergence of the infrared image and the visible image, the infrared image and the visible light image captured from the same viewing angle may be acquired at first.

In the present embodiment, the infrared image and the visible light image may be acquired by a machine such as an infrared thermography capable of simultaneously capturing the infrared image and the visible light image, and the like. In this way, because detectors of visible and infrared light as well as lenses are fixed in assembled infrared thermography, in the following steps of obtaining registration parameters, one machine only needs to be calibrated once before leaving factory. However, the present disclosure is not limited thereto. In other embodiments, the method of the present disclosure may be applied to mergence of any infrared images and visible light images of the same viewing angle. In an embodiment, the infrared image and the visible image may be acquired by an infrared camera and a visible light camera, respectively.

In the present embodiment, the lenses of the infrared camera and the visible light camera may be mounted in the same position, with optical axes of the lenses being provided in the same direction and parallel to each other, so as to acquire the infrared image and the visible light image captured from the same viewing angle. In another embodiment, it is also possible to acquire the infrared image and the visible light image of the same scene from different viewing angles. But compared to the former embodiment in which the infrared image and the visible light image captured from the same viewing angle are acquired, the latter one requires matching of the viewing angles before image registration, so operation process thereof is more complicated.

In the present embodiment, in order to make the visible image have better clarity, a visible light sensor with high-resolution may be provided for capturing visible light images. For example, a visible light sensor with 1.3 million or more pixels may be used. However, for capturing infrared images, non-cooling or cooling infrared camera may be used. The method for acquiring the infrared image and the visible light image in this step may use the same method in related art, and will not be described here.

In an exemplary embodiment, the method may further include performing image registration of the infrared image and the visible light image.

In the above embodiments, the infrared image and the visible light image of the same viewing angle may be acquired by mounting the lenses of the infrared camera and the visible light camera in parallel, but view fields of the infrared image and the visible image may still not match with each other. A position of target in the infrared image may be greatly different from a position of the target in the visible light image. Therefore, in related art, the infrared image and the visible light image cannot be effectively utilized to simultaneously recognize the same target. Because positions of the target are different, reorganization of a single image (infrared or visible light) is mostly adopted in related method for target recognition and localization of existing infrared monitoring systems. When the color of the environment or the color around the target is very close to the color of the target being monitored, visible light image recognition algorithm cannot effectively recognize the target. When an environment temperature or a temperature around the target is very close to the temperature of the target being monitored, infrared image recognition algorithm cannot effectively recognize the target. Therefore, use of a single image recognition may often result in a case that the target cannot be recognized, thereby reducing rate of target recognition. The detection may lead to an omission of faults or defect monitoring, thereby causing significant economic losses. Therefore, the use of infrared and visible light complementary recognition and position monitoring target may greatly improve the accuracy of the target recognition rate.

A range of the viewing angle may be registered according to the resolution of the infrared image and the visible light image such that scene regions of the infrared image and the visible light image are the same.

In an exemplary embodiment, performing image registration of the infrared image and the visible light image includes following step. One of the infrared image and the visible light image is selected as a reference image, and another one among them is selected as an image to be registered. Registration parameters of the image to be registered are acquired. Image registration of the infrared image and the visible light image is implemented according to the registration parameters of the image to be registered.

In an exemplary embodiment, the reference image is the infrared image. The image to be registered is the visible light image. In another embodiment, the reference image may be the visible light image. The image to be registered may be the infrared image.

In an exemplary embodiment, the acquiring the registration parameters of the image to be registered includes following steps. A testing target and a preset number of feature points on the testing target are selected. Another preset number of testing infrared images and testing visible light images are acquired with the testing target being at different target distances, and coordinates of the feature points on the testing infrared images and the testing visible light images are acquired respectively. The another preset number of affine transformation parameters are acquired according to an affine transformation formula and the coordinates of the feature points. Relational expression between the affine transformation parameters and the target distances are acquired by fitting according to the another preset number of the affine transformation parameters. The registration parameters of the image to be registered are acquired according to the relational expression and a distance between the image to be registered and a tested target.

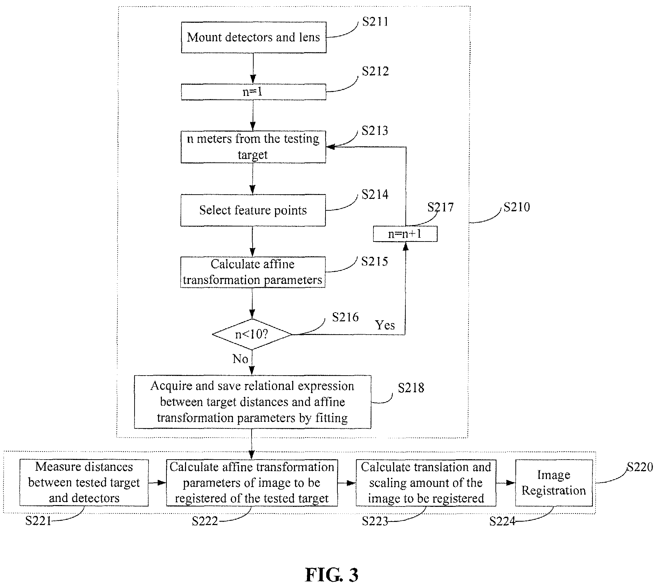

In an embodiment, the preset number is greater than or equal to 2. An example of image registration may refer to the embodiments shown in FIG. 3 as follows.

In an embodiment, during the process of image registration, the infrared image and the visible light image may be preprocessed respectively, which may further improve the accuracy of image registration. In an embodiment, steps of preprocessing the infrared image and the visible light image may include image denoising, image enhancement and image transformation. For example, during the process of the image denoising, spatial filtering of the infrared image and the visible image is performed. During the process of the image enhancement, histogram enhancement of denoised infrared image and visible image is performed. During the process of the image transformation, wavelet transform of enhanced infrared image and visible image is performed. Of course, the present disclosure does not limit this, and any existing image preprocessing method may be applied to the embodiments of the present disclosure.

In step S120, edge information of the luminance component of the visible light image is extracted, and then merged with the luminance component of the infrared image to acquire a merged luminance component.

In an exemplary embodiment, the edge information of the visible light image may be extracted by filtering the luminance component of the visible light image, and extracting the edge information of the visible light.

In an exemplary embodiment, filtering of the luminance component of the visible light image may be performed by adopting the following filter matrix for filtering:

$$\begin{bmatrix} -2 & -4 & -4 & -4 & -2 \\ -4 & 0 & 8 & 0 & -4 \\ -4 & 8 & 24 & 8 & -4 \\ -4 & 0 & 8 & 0 & -4 \\ -2 & -4 & -4 & -4 & -2 \end{bmatrix}.$$

In other embodiments, it is also possible to sequentially perform 3*3 Gaussian filtering and 3*3 Laplacian filtering of the luminance component of the visible light image. In the present embodiment, in order to reduce amount of calculation, a 5*5 filter matrix is directly adopted for filtering only once.

In an exemplary embodiment, merging of the edge information and the luminance component of the infrared image includes that equal proportional weighted merging of the edge information and the luminance component of the infrared image is performed.

It should be noted that although a method of performing the equal proportional weighted merging of the edge information and the luminance component of the infrared image is adopted in the above-described embodiments, but in other embodiments, the following formula may be adopted for merging.

$$F = \omega_1 A + \omega_2 B \quad , \quad \omega_1 + \omega_2 = 1$$

In the embodiment, A and B are indicative of the edge information of the visible light image and the luminance component of the infrared image respectively. $\omega_1$ and $\omega_2$ represent weight values of A and B respectively, and sum of them is 1. F represents the merged luminance component. In the above-described method of equal proportional weighted merging, it is equivalent to set $\omega_1=\omega_2=0.5$. The weight values may be adjusted according to actual requirements, as long as make sure that the sum of the two weight values is equal to 1.

In step S130, pseudo-coloring of the infrared image is performed to acquire a pseudo-color infrared image.

Infrared imaging technology is a radiation information detection technology for converting temperature distribution of a surface of an object into an image that is visible to human eye. The image is an infrared image that reflects infrared radiation capability of the surface of the object and visually characterizes and displays infrared radiation temperature field distribution of the surface of the tested target. Since the infrared image is a black-and-white gray level image, dynamic range of gray values is not large. It is difficult for the human eye to acquire detailed radiation information of the target from gray scale information. Gray scale levels that the human eye can distinguish are usually only more than twenty, but it can distinguish tens of millions of colors. Therefore, pseudo-colorization of the infrared image is implemented by using high-resolution and high-sensitivity of color vision of the human eye to enhance scene understanding and highlight the target, so that it is facilitating for faster and more accurate detection and recognition of the target, and fatigue of observer is reduced. At present, industrial infrared thermal imager generally maps a gray scale image into a color image by a color table, that is the pseudo-color infrared image, so that contrast between different gray scale levels of images is enhanced. In this way, interpreters can more accurately interpret the images.

However, due to low resolution of the infrared image, even the use of display method of the pseudo-color infrared image can only observe temperature information of some local (or large target) images, and it is difficult to observe specific details of the images of the target. The visible light image with high resolution is provided with high spatial resolution and reflects detailed information.

In step S140, color space conversion of the pseudo-color infrared image is performed to acquire a color tone component and a saturation component.

In the present embodiment, color space conversion is referred to convert the pseudo-color infrared image from the RGB color space to the YUV color space.

In step S150, color space inversion of the merged luminance component, the color tone component and the saturation component is performed to acquire a pseudo-color merged image.

In the present embodiment, the color space inversion is referred to convert the merged luminance component, the color tone component and the saturation component from the RGB color space to the YUV color space.

In an embodiment, it may further be judged whether a temperature indicated by a pseudo-color merged image exceeds a temperature threshold. When the temperature exceeds the temperature threshold, an alarm message may be sent to user, so that the user can take measures in time. The temperature threshold may be set based on operating limit temperature of different components in device.

The method for merging the infrared image and the visible light image provided by the embodiments merges the infrared image and the visible light image with high resolution, so that merged images no only reflect approximate temperature information of the target, but also observe details of the target. Improving the spatial resolution of the infrared image by using method of image merging not only helps to improve interpretation accuracy and efficiency of image interpreters, but also helps the interpreters to interpret the images, thereby overcoming problem that the distribution of the temperature inside the device in full visible image cannot be accurately identified and a type of the object cannot be accurately distinguished in full infrared image.

In some embodiments, on the one hand, by firstly merging the infrared image and the visible light image captured from the same viewing angle and then performing the process of image merging, the user may merge two images so that components exceeding the specified temperature limit can be accurately displayed. It helps the user to better identify and report suspicious components, and enables the maintenance personnel to complete repair at the first time. On the other hand, the method is simple to be implemented, and only hardware language is enough to complete implementation of the method, at the same time, an implementation speed of the method is fast, and the method can be implemented in real time.

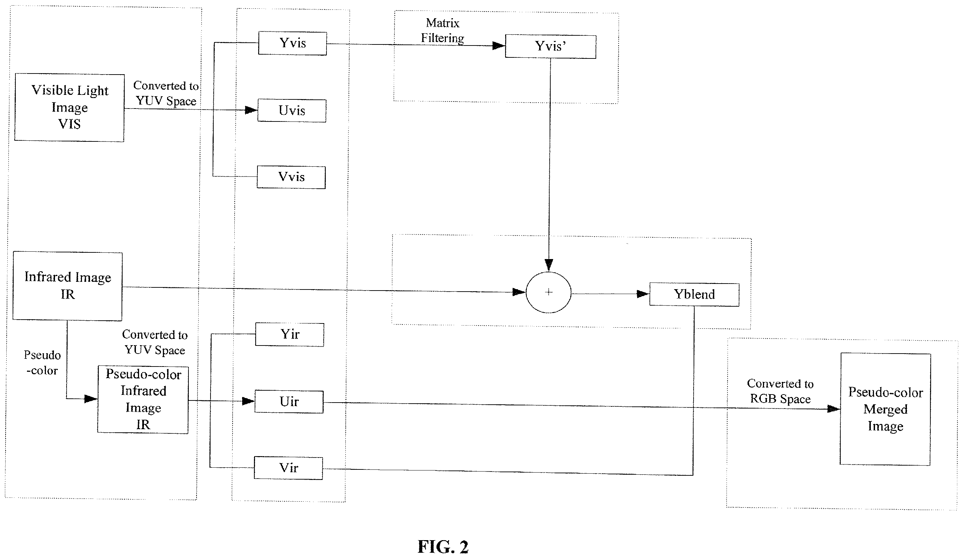

FIG. 2 is a schematic diagram illustrating a method for merging the infrared image and the visible light image according to an exemplary embodiment of the present disclosure.

As shown in FIG.2, firstly, a visible light image VIS and an infrared image IR of the tested target are input. The visible light image VIS is converted into the YUV color space to acquire a luminance component Yvis, a color tone component Uvis and a saturation component Vvis. Since an infrared image IR captured by the infrared camera is the gray scale image, it is needed to pseudo-color the infrared image IR to acquire a pseudo-color infrared image IR, and then the pseudo-color infrared image IR is converted into the YUV color space to acquire a luminance component Yir, the color tone component Uir and the saturation component Vir of the pseudo-color infrared image IR.

In the embodiment, pseudo-coloring of the infrared image IR is performed to generate the pseudo-color infrared image of the target by using the gray values of the infrared image and a pseudo-color lookup table with pre-configured. Specifically, the method may include that the gray value of each of pixels of the infrared image is read. Then, the pixels of same gray value are mapped to the same color by using the color defined in the pseudo-color lookup table to generate the pseudo-color infrared image IR. Then, conversion from the RGB color space to the YUV color space of the pseudo-color infrared image IR and the visible light image VIS of the tested target is performed to acquire representations in YUV color space of the pseudo-color infrared image IR and the visible light image VIS.

In the present embodiment, pseudo-color will be provided in the infrared thermal imager for the user to choose. The pseudo-color lookup table includes the gray values in the range of 0-255. Each of the gray values corresponds to three color values of R/G/B. A gray image finds, according to the gray value of each of the pixels, corresponding three color values of R/G/B in the pseudo-color lookup table to form a pseudo-color image.

In the present embodiment, color space conversion of the pseudo-color infrared image IR and the visible light image VIS with colored is performed. The visible light image VIS with colored and the pseudo-color infrared image IR are converted from the RGB color space to the YUV color space to acquire gray images provided with Y/U/V three-channel according to a conversion empirical formula of YUV and RGB color space.

In the embodiment, the conversion empirical formula as follows may be adopted.

$$\begin{bmatrix} Y \\ U \\ V \end{bmatrix} = \begin{bmatrix} 0.299 & 0.587 & 0.114 \\ -0.169 & -0.331 & -0.5 \\ 0.5 & -0.419 & 0.081 \end{bmatrix} \begin{bmatrix} R \\ G \\ B \end{bmatrix},$$

In the embodiment, R, G and B represent red, green and blue channels of the visible light image or the infrared image, respectively.

In an exemplary embodiment, the filtering process of the luminance component Yvis of the visible light image VIS is performed to extract the edge information. In the present embodiment, filtering of the luminance component Yvis of the visible light image VIS is performed by using a 5*5 filter operator of the LOG to acquire the gray image containing only the edge information.

After filtering of the luminance component Yvis of the visible light image VIS, the luminance component Yvis' of the visible light image VIS is acquired. The weighted merging of the luminance component Yvis' of the visible light image VIS and the luminance component of the infrared image IR is performed to acquire a merged luminance component Yblend.

The merged luminance component Yblend acquired according to the luminance component Yvis' of the visible light image VIS and the luminance component of the infrared image IR, the color tone component Uir and the saturation component Vir of the pseudo-color infrared image IR are converted into a RGB space to acquire the pseudo-color merged image.

In the embodiment, the conversion empirical formula as follows may be adopted.

$$\begin{bmatrix} R \\ G \\ B \end{bmatrix} = \begin{bmatrix} 1.164 & 0 & 1.596 \\ 1.164 & -0.392 & -0.813 \\ 1.164 & 2.017 & 0 \end{bmatrix} \begin{bmatrix} Y \\ U \\ V \end{bmatrix}.$$

In the present embodiment the method for merging image adopted in the embodiment is superimposed with conventional visible light image and the infrared image. Different from partial substitution merging, the method does not retain color information and gray information of the visible image, ad only retains edge contour information which is superimposed with the infrared image to form the merged image.

Since the infrared image and the visible image captured from the same viewing angle are matched at first and then merged, the user can more intuitively see key information such as a model number, a sticker label, and structural features on the device, thereby judging a location of a broken down point and completing the repair at the first time or detecting effect after the repair. It is needed to perform image registration of the infrared image and the visible light image to acquire the infrared image and the visible light image captured from the same viewing angle. FIG. 3 illustrates a method for implementation of image registration as follows.

FIG. 3 is a flow chart of a method for implementation of image registration according to an exemplary embodiment of the present disclosure.

As shown in FIG. 3, the method for implementation of image registration includes two steps in the following.

In step S210, detectors are calibrated before image registration.

In step S220, the detectors calibrated in the step S210 is applied to the method for implementation of image registration in the embodiments of the present disclosure.

In the embodiment, the step S210 may include the following steps.

In step S211, the detectors and the lenses are mounted.

The Optical axes of the lenses of visible light detector and infrared detector are adjusted in parallel, and there is no rotation angle between the visible light detector and the infrared detector which are in the same parallel plane.

It is assumed here that distances between the testing target and the detectors are 1-10 meters respectively. It should be noted that specific values of target distances (e.g., 1 meter, 2 meters up to 10 meters), how many groups are divided (e.g., 10 groups), and distributions between each of the groups may be equal interval distribution or unequal interval distribution (e.g., equal interval distribution, there is a distance of 1 meter between each of the groups) may be set independently according to requirements, and the present disclosure is not limited thereto.

In step S212, n=1 is initially set, and n is a positive integer greater than or equal to 1, and less than or equal to 10.

In step S213, the distance from the detectors to the testing target is set as n meters.

In step S214, the feature points on the testing target are selected, and corresponding coordinates of the feature points on the testing visible light images and the testing infrared images acquired by the detectors through capturing and are recorded.

During the calibration, a high temperature object in a landmark shape may be selected as the testing target. It is ensured that the object can be simultaneous clearly imaged in both the testing infrared images and the testing visible light images within selected target distances (for example, within 1-10 meters), and there are at least two pairs of distinct feature points. Herein, one point in the testing infrared images and one point in corresponding testing visible light image are referred to as a pair. Two feature points are selected in each of the testing infrared images, which are corresponding to the two feature points in each of the testing visible light images. Here, two pairs of feature points are taken as an example for description, but the present disclosure is not limited thereto, and in other embodiments, more pairs of feature points may be selected. The two pairs of feature points are artificially selected as the two pairs of registration control points of which corresponding coordinates in the testing infrared images and the testing visible light images are recorded.

In step S215, according to a affine transformation formula as follows and the corresponding coordinates of the two pairs of the registration control points in the testing infrared images and the testing visible light images, when the target distances are calculated as L, corresponding affine transformation parameters are calculated as $k_1$, $k_2$, $t_1$, $t_2$. In the following embodiments, the testing infrared images is illustrated as an example of the reference image, and the image to be registered is illustrated as an example of the testing visible light.

It should be noted that, in other embodiments, the testing visible image may be taken as the reference image, and the testing infrared images may be taken as the image to be registered. Since a view field of general infrared images is small, the infrared image is taken as the reference image, and a matching region is found in the visible light image. If the visible light image with a large view field is taken as the reference image, there may be a partial region in final merged image which has no corresponding infrared image.

In the embodiment, the affine transformation formula is as the following.

$$\begin{bmatrix} x \\ y \end{bmatrix} = \begin{bmatrix} \dfrac{1}{k_1} & 0 \\ 0 & \dfrac{1}{k_2} \end{bmatrix} \begin{bmatrix} x^{'} - t_1 \\ y^{'} - t_2 \end{bmatrix}$$

During the calibration, in the embodiment, ($x'$, $y'$) is coordinate of a registration control point in the image to be registered. (x, y) is corresponding coordinate of the registration control point in the reference image. When applied, ($x'$, $y'$) is the coordinate of a pixel in the visible image before transformation, and (x, y) is the coordinate mapped by the pixel in the visible image after the transformation. $k_1$, $k_2$ are scaling factors in x, y direction respectively. $t_1$, $t_2$ are translation coefficients in the x, y direction.

In step S216, it is judged whether n is less than 10. When n is not less than 10 (n=10), the step S218 is performed; when n is less than 10, the step S217 is performed.

In step S217, the n is incremented by 1 and then it continues to jump back to the step S213 to cyclically calculate a mapping relationship between next group of the affine transformation parameters and the target distances.

In step S218, by fitting the mapping relationship between 10 sets of the affine transformation parameters and the target distances acquired in the above, relational expressions between the target distances L and the affine transformation parameters are acquired and saved.

By cycling of 10 times in the above , the mapping relationship between the 10 sets of the affine transformation parameters $k_1$, $k_2$, $t_1$, $t_2$ and the target distances L (are 1 meter, 2 meters, ......, 10 meters) acquired in the above is

acquired, so that $k_1/L$ , $k_2/L$ , $t_1/L$ , $t_2/L$ curves that is the relational expressions between the target distances L and the affine transformation parameters are acquired and saved.

In the embodiment, the fitting can by performed by quadratic polynomial fitting with aid of Excel or Matlab, which are well-known and will not be described herein.

When applied, the target distances L between the tested target and the detectors may be acquired by a ranging module (for example, a laser ranging module). According to saved $\frac{k_1}{L}$, $\frac{k_2}{L}$, $\frac{t_1}{L}$, $\frac{t_2}{L}$ expressions, values of the affine transformation parameters $k_1$, $k_2$, $t_1$, $t_2$ corresponding to the target distances L between the tested target and the detectors are calculated.

In the embodiment, the step S220 may include the following steps.

In step S221, the target distances L between the tested target and the detectors are measured.

In step S222, the affine transformation parameters $k_1$, $k_2$, $t_1$, $t_2$ of the image to be registered of the tested target are calculated.

In step S223, translation amounts and scaling amounts of the image to be registered are calculated.

An affine transformation parameter $k_1$ calculated in the step S222 is taken as a scaling amount in the x direction of the image to be registered. The affine transformation parameter $k_2$ is taken as a scaling amount in the y direction of the image to be registered.

The affine transformation parameter $t_1$ is taken as a translation amount in the x direction of the image to be registered. The affine transformation parameter $t_2$ is taken as the translation amount in the y direction of the image to be registered.

In step S224, image registration is performed.

According the translation amounts and the scaling amounts of the image to be registered, the visible light image is moved in parallel and enlarged/reduced in up, down, left and right directions to realize automatic registration.

The embodiments of the present disclosure have the following beneficial effects. On the one hand, in the process of image merging of the infrared image and the visible light image, firstly, image registration is implemented according to image registration parameters, so that calculation amount of numerical transformation is greatly reduced, and calculation speed is improved, thereby improving the speed of image merging and meeting real-time requirements of image processing. On the other hand, the infrared detector and the visible light detector are juxtaposed and fixed on the same turntable in the method for merging the infrared image and the visible light image, and the optical axes of the two are parallel to imaging coordinate axes. Therefore, elevation angles and azimuth angles of imaging of the two are consistent, and only scaling ratio and the translation amounts are needed to be adjusted during the process of image registration, which reduces difficulty of image registration.

In order to implement the embodiments of the method in the above, other embodiments of the present disclosure further provide an apparatus for merging the infrared image and the visible light image. It should be noted that, since the following embodiments are for implementing the embodiments of the method in the above, the apparatus are provided to implement steps of the method in the above. However, the present disclosure is not limited to the embodiments described below, and any apparatus that can implement the method in the above should be included in the scope of the present disclosure. And in the following description, the same contents as the method described above are omitted here to save space.

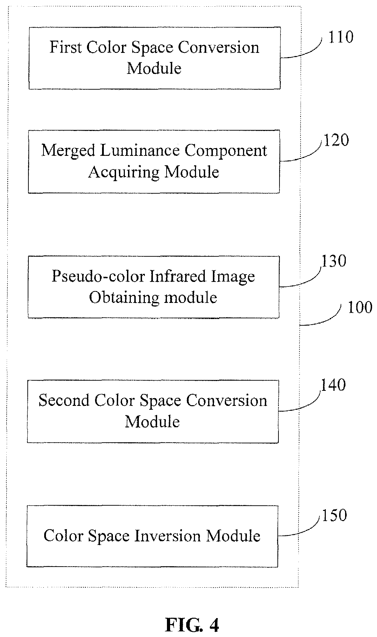

FIG. 4 is a block diagram illustrating an apparatus for merging the infrared image and the visible light image according to an exemplary embodiment of the present disclosure.

As shown in fig.4, the apparatus 100 for merging the infrared image and the visible light image includes a first color space conversion module 110, a merged luminance component acquiring module 120, a pseudo-color infrared image obtaining module 130, a second color space conversion module 140, a color space inversion module 150.

In the embodiment, the first color space conversion module 110 is configured for performing conversion from RGB color space to YUV color space of the visible light image to acquire the luminance component thereof.

In the embodiment, the merged luminance component acquiring module 120 is configured for extracting edge information of the luminance component of the visible light image, which is merged with the luminance component of the infrared image to acquire a merged luminance component.

In the embodiment, the pseudo-color infrared image obtaining module 130 is configured for performing pseudo-coloring of the infrared image to acquire the pseudo-colored infrared image.

In the embodiment, the second color space conversion module 140 is configured for performing conversion from the RGB color space to the YUV color space of the pseudo-colored infrared image to acquire the color tone component and the saturation component.

In the embodiment, the color space inversion module 150 is configured for performing color space inversion of the merged luminance component, the color tone component and the saturation component to acquire a pseudo-color merged image.

In an exemplary embodiment, the apparatus 100 may further include an image collection module configured for collecting the visible light image and the infrared image of the same viewing angle respectively.

In an exemplary embodiment, the apparatus 100 may further include an image registration module configured for performing image registration of the infrared image and the visible light image.

In an exemplary embodiment, the apparatus 100 may further include a mode selection module for selecting any one of a plurality of preset output modes.

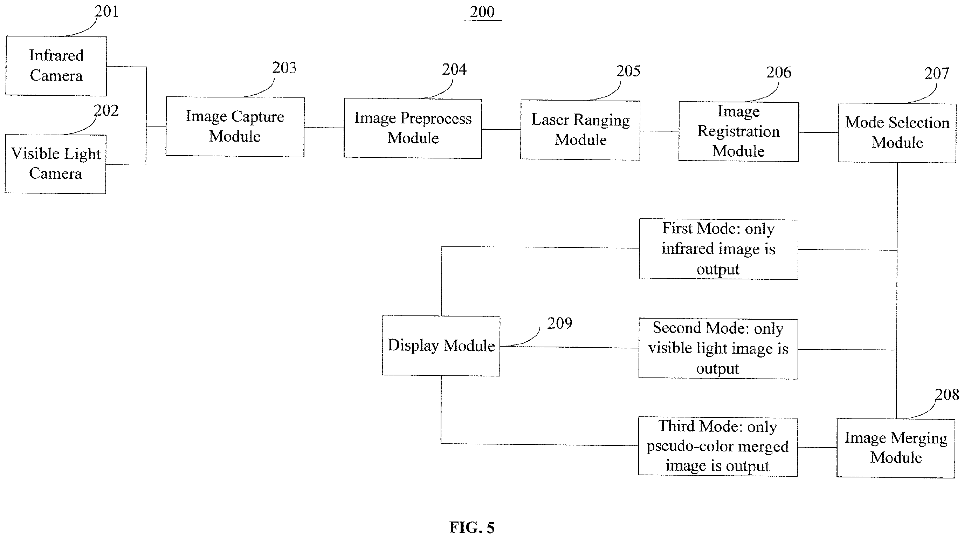

FIG. 5 is a block diagram illustrating an apparatus for merging the infrared image and the visible light image according to another exemplary embodiment of the present disclosure.

As shown in fig. 5, the apparatus 200 for merging the infrared image and the visible light image may include an infrared camera 201 (an infrared detector) and a visible light camera 202 (a visible light detector); an image collection module 203 may collect the infrared image and the visible light image of the same viewing angle captured by the infrared camera 201 and the visible light camera 202. An image pre-processing module 204 performs pre-processing of the visible light image and the infrared image such as denoising, de-bad point, non-uniformity correction, and pseudo-coloring of the infrared image. A laser ranging module 205 is configured to measure the distances between the target (the testing target and/or the tested target) and the infrared detectors, the visible light detectors. The calibration process of an image registration module 206 is shown in FIG. 3, in which the detectors (the infrared detector, the visible light detector) need to be calibrated before image registration. In the embodiment, for fixed-focus lenses, the registration control points may be manually selected, and the calibration is only performed once. Translation parameters and scaling parameters (translation and scaling directions are represented by positive and negative) are acquired after the calibration, and for example, the visible light image is processed to obtain a pixel-matched visible light image. A mode selection module 207 may include a first mode, a second mode and a third mode. In the embodiment, the first mode only outputs the infrared image to a display module 209 for display. The second mode only outputs the visible light image to the display module 209 for display. The third mode only outputs the pseudo-color merged image. When the third mode is selected, the mode selection module 207 further needs to be connected to an image merging mode 208 which generates the pseudo-color merged image and outputs it to the display module 209 for display. Here, the method for merging adopts the method for merging images in the above embodiments of the present disclosure.

In other embodiments, the mode selection module 207 may further include more or less modes. For example, there is a fourth mode that a merged image acquired by registering and merging regions of the infrared image and the visible image above a certain temperature is output to the display module for display. Optionally, there is a fifth mode that the merged image acquired by the infrared image replacing the visible region and forming image-in-image mergence is output to the display module for display. Optionally, there is a sixth mode that the merged image acquired by method for an full field of viewing registration merging based on image pixel superimposition mergence with adjustable weight ratio is output to the display module for display.

In the embodiment, compared with the merged image acquired in the fourth mode to the sixth mode described above, physical details are still not rich, and the location of the fault point of the device can only be judged based on unfused part of the visible light region. A merged part of the merged image is provided with both the color information of the visible light image and the color information of the infrared image, which easily confuses observation points and does not conform to the user's observation habit. The final pseudo-color merged image obtained by the method for merging adopted by the embodiments of the present disclosure includes both physical detail information of the visible light image and temperature information of the infrared image.

The exemplary embodiments of the present disclosure have been particularly shown and described above. It should be understood that the present disclosure is not limited to the disclosed embodiments. Rather, the present disclosure is intended to cover various modifications and equivalent arrangements included in the spirit and scope of the appended claims.

**Claims**

1. A method for merging an infrared image and a visible light image, comprising:

performing color space conversion of the visible light image to acquire a luminance component of the visible light image;
extracting edge information from the luminance component of the visible light image, and merging the edge information with a luminance component of the infrared image to acquire a merged luminance component;
performing pseudo-coloring of the infrared image to acquire a pseudo-color infrared image;
performing color space conversion of the pseudo-color infrared image to acquire a color tone component and a saturation component; and
performing color space inversion of the merged luminance component, the color tone component and the saturation component to acquire a pseudo-color merged image.

2. The method according to claim 1, further comprising: collecting the visible light image and the infrared image at a same viewing angle respectively.

3. The method according to claim 2, further comprising: performing image registration of the infrared image and the visible light image.

4. The method according to claim 3, wherein the performing image registration of the infrared image and the visible light image comprises:

    selecting one of the infrared image and the visible light image as a reference image, and another one as an image to be registered;
    acquiring a registration parameter of the image to be registered;
    implementing image registration of the infrared image and the visible light image according to the registration parameter of the image to be registered.

5. The method according to claim 4, wherein the reference image is the infrared image, and the image to be registered is the visible light image.

6. The method according to claim 4, wherein the acquiring a registration parameter of the image to be registered comprises:

    selecting a testing target and a preset number of feature points on the testing target;
    acquiring another preset number of testing infrared images and testing visible light images with the testing target being at different target distances, respectively, and coordinates of the feature points on the testing infrared images and the testing visible light images;
    acquiring the another preset number of affine transformation parameters according to an affine transformation formula and the coordinates of the feature points;
    acquiring relational expression between the affine transformation parameters and the target distances by fitting according to the another preset number of the affine transformation parameters; and
    acquiring the registration parameter of the image to be registered according to the relational expression and a distance between the image to be registered and a tested target.

7. The method according to claim 1, wherein the extracting edge information of the visible light image comprises: performing filtering of the luminance component of the visible light image to extract the edge information of the visible light.

8. The method according to claim 7, wherein the performing filtering of the luminance component of the visible light image comprises performing the filtering with a filter matrix:

$$\begin{bmatrix} -2 & -4 & -4 & -4 & -2 \\ -4 & 0 & 8 & 0 & -4 \\ -4 & 8 & 24 & 8 & -4 \\ -4 & 0 & 8 & 0 & -4 \\ -2 & -4 & -4 & -4 & -2 \end{bmatrix}.$$

9. The method according to claim 1, wherein the merging the edge information with a luminance component of the infrared image comprises: performing equal proportional weighted merging of the edge information and the luminance component of the infrared image.

10. An apparatus for merging an infrared image and a visible light image, comprising:

    a first color space conversion module configured for performing conversion, from RGB color space to YUV color space, of the visible light image to acquire a luminance component of the visible light image;

a merged luminance component acquiring module configured for extracting edge information from the luminance component of the visible light image, and merging the edge information with a luminance component of the infrared image to acquire a merged luminance component;

a pseudo-color infrared image obtaining module configured for performing pseudo-coloring of the infrared image to acquire a pseudo-color infrared image;

a second color space conversion module configured for performing conversion, from the RGB color space to the YUV color space, of the pseudo-color infrared image to acquire a color tone component and a saturation component; and

a color space inversion module configured for performing conversion, from the YUV color space to the RGB color space, of the merged luminance component, the color tone component and the saturation component to acquire a pseudo-color merged image.

11. The apparatus according to claim 10, further comprising: an image collection module configured for collecting the visible light image and the infrared image at a same viewing angle respectively.

12. The apparatus according to claim 11, further comprising: an image registration module configured for performing image registration of the infrared image and the visible light image.

13. The apparatus according to claim 12, further comprising: a mode selection module for selecting any one of a plurality of preset output modes.

Perform colour space conversion of a visible light image to acquire the luminance component thereof — S110

Extract edge information of the luminance component of the visible image, and merge the edge information and the luminance component of an infrared image to acquire a merged luminance component — S120

Pseudo-colour the infrared image toacquire a pseudo-coloured infrared image — S130

Perform colour space conversion of the pseudo-coloured infrared image to acquire the colour tone component and saturation component thereof — S140

Perform inverse colour space conversion of the merged luminance component,the colour tone component,and the saturation component to acquire a pseudo-caloured merged image — S150

**FIG. 1**

**FIG. 2**

FIG. 3

First Color Space Conversion
Module / 110

Merged Luminance Component
Acquiring Module /120

Pseudo-color Infrared Image
Obtaining module /130

/ 100

Second Color Space Conversion
Module /140

Color Space Inversion Module /150

**FIG. 4**

201 Infrared Camera

202 Visible Light Camera

203 Image Capture Module

204 Image Preprocess Module

205 Laser Ranging Module

206 Image Registration Module

207 Mode Selection Module

First Mode: only infrared image is output

Second Mode: only visible light image is output

Third Mode: only pseudo-color merged image is output

Display Module

209

208 Image Merging Module

200

**FIG. 5**

EP 3 534 326 A1

<table>
<tr><td colspan="2">**INTERNATIONAL SEARCH REPORT**</td><td>International application No.<br>PCT/CN2017/089508</td></tr>
</table>

**A. CLASSIFICATION OF SUBJECT MATTER**

G06T 5/50 (2006.01) i; G06T 7/30 (2017.01) i; G06T 7/90 (2017.01) i
According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)
CNPAT, CNKI, WPI, EPODOC: 图像, 融合, 红外, 可见光, 亮度, 边缘, 颜色, 彩色, 伪彩, 色调, 饱和度, image, fusion, infra, visible, brightness, luminance, edge, color, colour, pseudo, hue, saturation

**C. DOCUMENTS CONSIDERED TO BE RELEVANT**

| Category* | Citation of document, with indication, where appropriate, of the relevant passages | Relevant to claim No. |
|---|---|---|
| PX | CN 106548467 A (GUANGZHOU SAT INFRARED TECHNOLOGY CO., LTD.), 29 March 2017 (29.03.2017), claims 1-13, description, paragraphs [0001]-[0145], and figures 1-5 | 1-13 |
| X | 王加 等. "基于感知颜色空间的灰度可见光与红外图像融合算法", 光电子.激光, 19(9), 30 September 2008 (30.09.2008), page 1262, "2 Fusion algorithm", (WANG, Jia et al., "An Algorithm to Fuse Grey-scale Infrared and Visible Light Based on Perceptual Colour Space", Journal of Optoelectronics · Laser) | 1-5, 7-13 |
| Y | 王加 等. "基于感知颜色空间的灰度可见光与红外图像融合算法", 光电子.激光, 19(9), 30 September 2008 (30.09.2008), page 1262, "2 Fusion algorithm", (WANG, Jia et al., "An Algorithm to Fuse Grey-scale Infrared and Visible Light Based on Perceptual Colour Space", Journal of Optoelectronics · Laser) | 6 |
| Y | 冯晓伟. "基于特征点的图像配准技术及应用", 中国优秀硕士学位论文全文数据库信息科技辑, no. 06, 15 June 2009 (15.06.2009), pages 51-56, "4.4 Image registration algorithm based on affine transformation", (FENG, Xiaowei; "Image Registration Algorithm Based on the Feature Points and Application", Electronic Technology & Information Science, China Master's Theses Full-Text Database) | 6 |
| A | CN 105989585 A (SHENZHEN LAUNCH DIGITAL TECHNOLOGY CO., LTD.), 05 October 2016 (05.10.2016), entire document | 1-13 |
| A | CN 104683767 A (ZHEJIANG UNIVIEW TECHNOLOGIES CO., LTD.), 03 June 2015 (03.06.2015), entire document | 1-13 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>18 August 2017 | Date of mailing of the international search report<br>28 September 2017 |
|---|---|
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WU, Huangfei<br><br>Telephone No. (86-10) 62414414 |

Form PCT/ISA/210 (second sheet) (July 2009)

## INTERNATIONAL SEARCH REPORT

International application No.

PCT/CN2017/089508

C (Continuation).     DOCUMENTS CONSIDERED TO BE RELEVANT

| Category* | Citation of document, with indication, where appropriate, of the relevant passages | Relevant to claim No. |
|---|---|---|
| A | CN 102982518 A (YANGZHOU WANFANG ELEXTRONIC TECHNOLOGY CO., LTD.), 20 March 2013 (20.03.2013), entire document | 1-13 |
| A | CN 102789640 A (INSTITUTE OF AUTOMATION, CHINESE ACADEMY OF SCIENCES et al.), 21 November 2012 (21.11.2012), entire document | 1-13 |
| A | CN 101339653 A (XIDIAN UNIVERSITY), 07 January 2009 (07.01.2009), entire document | 1-13 |
| A | 王加 等. "基于伪彩色编码和图像融合的伪装目标识别方法", 探测与控制学报, 30(2), 30 April 2008 (30.04.2008), pages 43-46, (WANG, Jia et al., "A Disguised Target Recognition Method Based on Pseudo-colour Coding and Image Fusion", Journal of Detection & Control) | 1-13 |

Form PCT/ISA/210 (continuation of second sheet) (July 2009)

## INTERNATIONAL SEARCH REPORT
### Information on patent family members

| | International application No. |
|---|---|
| | PCT/CN2017/089508 |

| Patent Documents referred in the Report | Publication Date | Patent Family | Publication Date |
|---|---|---|---|
| CN 106548467 A | 29 March 2017 | None | |
| CN 105989585 A | 05 October 2016 | None | |
| CN 104683767 A | 03 June 2015 | None | |
| CN 102982518 A | 20 March 2013 | None | |
| CN 102789640 A | 21 November 2012 | CN 102789640 B | 16 December 2015 |
| CN 101339653 A | 07 January 2009 | CN 101339653 B | 02 June 2010 |

Form PCT/ISA/210 (patent family annex) (July 2009)